# EUROPÄISCHE PATENTSCHRIFT

(11) **EP 0 361 292 B1**
(45) Veröffentlichungstag und Bekanntmachung des Hinweises auf die Patenterteilung: **01.12.1993**
(21) Anmeldenummer: 89117363.5
(22) Anmeldetag: 20.09.1989
(51) Int. Cl.: H02P 9/08, H02J 3/34

(54) **Synchronmaschine mit einer Nebenschlusserregereinrichtung**
Synchronous machine with a shunt excitation device
Machine synchrone avec appareil à excitation shunt

(30) Priorität: 30.09.1988 CH 3655/88
(43) Veröffentlichungstag der Anmeldung: 04.04.1990
(73) Patentinhaber: ASEA BROWN BOVERI AG, 5400 Baden (CH)
(72) Erfinder: Schäfer, René, CH-5034 Suhr (CH)

(56) Entgegenhaltungen:
- DE-A- 3 602 160
- TECHN. MITT. AEG-TELEFUNKEN vol. 63, no. 7, 1973, DE Seiten 273 - 278; P. HOLWECK: "ELEKTRONISCHE LEISTUNGSREGELUNG EINES ELASTISCHEN NETZKUPPLUNGSUMFORMERS"

## Beschreibung

### TECHNISCHES GEBIET

Bei der Erfindung wird ausgegangen von einer Synchronmaschine mit einer Nebenschlusserregereinrichtung nach dem Oberbegriff des Patentanspruchs 1.

### STAND DER TECHNIK

Mit dem Oberbegriff des Patentanspruchs 1 nimmt die Erfindung auf einen Stand der Technik Bezug, wie er aus der DE-A1-3 602 160 bekannt ist. Dort wird eine Wellengeneratoranlage mit Gleichstromzwischenkreis für Schiffe beschrieben, bei welcher ein von einer Verbrennungskraftmaschine mit veränderlicher Drehzahl angetriebener Wechselstromwellengenerator über einen Umrichter ein Wechselspannungsbordnetz mit konstanter Frequenz und Spannung speist. Die Energie für die Erregung des Wellengenerators, die bei grossem Luftspalt bis 5 % der Wellengenerator-Nennleistung betragen kann, wird beim Hochfahren über einen ungesteuerten Gleichrichter vom Bordnetz bezogen und im nachfolgenden Betrieb über einen Transistor-Steller aus dem Gleichstromzwischenkreis des Umrichters oder unmittelbar vom Wellengenerator.

Bei einem störungsbedingten Ausfall der Bordnetzspannung kann ein Wellengenerator mit geringer Restmagnetisierung nicht ohne weiteres hochgefahren werden.

In der deutschen Firmenzeitschrift: Techn. Mitt. AEG-Telefunken 63 (1973 7, S. 273 - 278, ist ein frequenzelastischer Umformer für 50/16 2/3 Hz angegeben, bei dem eine vom 50-Hz-Landesnetz gespeiste, als Motor betriebene 3phasige Asynchronmaschine mit einem an das 16 2/3-Hz-Bahnnetz angeschlossenen Einphasen-Synchrongenerator sowie mit einem Wellengenerator, d. h. einem Drehstromgenerator für die Eigenversorgung der Erregereinrichtungen sowie der wichtigsten Hilfsbetriebe, starr gekoppelt ist. Dieser mit dem 50-Hz-Landesnetz in Verbindung stehende Wellengenerator ist eine Synchronmaschine mit einem Erregerstromrichter als Nebenschlusserregereinrichtung.

Anschaffung und Unterhalt von Wellengeneratoren sind kostspielig.

Zum einschlägigen Stand der Stand der Technik wird ferner auf die Zeitschrift: Elektrische Bahnen, 85. Jg., H.4 (1987) S. 118 - 123, verwiesen. Dort werden bei Umformergruppen bis 70 MW zur frequenzelastischen Kupplung des 16 2/3-Hz-Bahnnetzes mit dem 50-Hz-Landesversorgungsnetz statische unter- und übersynchrone Stromrichterkaskaden auch für den Hochlauf und das Synchronisieren der Maschinengruppe (aus 3phasiger Asynchronmaschine und einphasiger Synchronmaschine) ans Netz eingesetzt. Die Umformergruppe kann über die Hochlaufeinrichtung auch wieder abgebremst werden. Die Rotorwicklung der Synchronmaschine wird von einem Erregerstromrichter gespeist, der über einen Erregertransformator an das 50-Hz-Landesnetz angeschlossen ist. Die Statorwicklungen der Synchronmaschine sind von einem Frequenzumrichter gespeist, der über einen eigenen Transformator an das Landesnetz angeschlossen ist. Diese Synchronmaschine kann nicht autonom am Bahnnetz betrieben werden, wie es von Bahnbetreibern in den meisten Fällen gewünscht wird.

Bezüglich des Hochfahrens der Synchronmaschine mittels der Asynchronmaschine wird auf die EP-A2-0 184 653 verwiesen.

### DARSTELLUNG DER ERFINDUNG

Die Erfindung, wie sie im Patentanspruch 1 definiert ist, löst die Aufgabe, eine Synchronmaschine der eingangs genannten Art derart weiterzuentwickeln, dass ein autonomer Betrieb am Bahnnetz auch bei fehlendem oder ungenügendem Restmagnetismus der Synchronmaschine und im Hochlaufbetrieb ohne besondere Hilfseinrichtungen möglich ist. Bei einem Netzkurzschluss soll die Erregung solange aufrechterhalten werden, bis eine Schutzauslösung der Synchronmaschine erfolgt ist.

Ein Vorteil der Erfindung besteht darin, dass eine Synchronmaschine autonom ohne Wellengenerator oder Hilfsnetz betrieben werden kann. Die Batterie ist so ausgelegt, dass sie bei fehlendem oder ungenügendem Restmagnetismus die Anfahrerregung, bei Kurzschlüssen im Netz eine genügend lange Kurzschlusserregung und bei einem frequenzvariablen Hochlauf über einen Umrichter während des Hochlaufes die Hochlauferregung aufbringen kann.

Gemäss einer vorteilhaften Ausgestaltung der Erfindung kann diese Lösung bei Bahnnetzkupplungsumrichtern, die über eine statische Kaskade mit variabler Frequenz hochgefahren werden, eingesetzt werden. Die während des Hochlaufs der Umformergruppe benötigte Erregerleistung wird ebenfalls der eingebauten Batterie entnommen. Die Erregerleistung kann direkt an den Klemmen der Synchronmaschine abgenommen werden, wobei der batteriegestützte Gleichspannungskreis über eine Einphasen-Stromrichterschaltung gespeist wird.

Die Regelung des Erregerstromes erfolgt vorzugsweise mittels eines mit normalen oder GTO-Thyristoren bestückten Zerhackers.

### KURZE BESCHREIBUNG DER ERFINDUNG

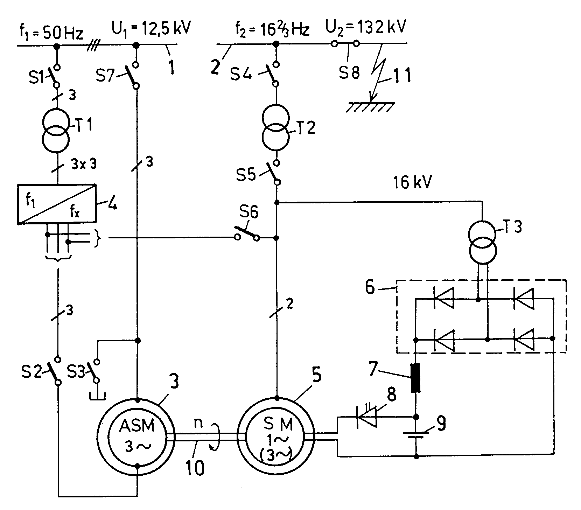

Die Erfindung wird nachstehend anhand eines Ausführungsbeispiels erläutert. Die einzige Figur zeigt ein Prinzipschaltbild eines Netzkupplungsumformers mit einer Synchronmaschine mit Nebenschlusserregungseinrichtung.

### WEG ZUR AUSFÜHRUNG DER ERFINDUNG

Mit 1 ist ein 3phasiges Wechselstromnetz bzw. ein Drehstrom-oder Landesnetz mit einer Wechselspannung von U₁ = 12,5 kV mit einer Landesnetzfrequenz f₁ = 50 Hz bezeichnet und mit 2 ein einphasiges Bahn- bzw. Wechselstromnetz mit einer Wechselspannung von U₂ = 132 kV und einer Bahnnetzfrequenz f₂ = 16 2/3 Hz, wie es für Eisenbahnbetrieb üblich ist. Das Drehstromnetz 1 ist über einen Schalter S7 mit den Statorwicklungen einer Asynchronmaschine 3 verbunden. Andererseits sind die Statorwicklungen der Asynchronmaschine 3 über einen Schalter S3 kurzschliessbar. Die Rotorwicklungen der Asynchronmaschine 3 stehen über einen Schalter S2 mit einem Frequenzeingang eines Stromrichters oder Umrichters bzw. Frequenzumrichters 4 in Verbindung, an dem eine einstellbare Frequenz fₓ zwischen 0 Hz und 25 Hz abgreifbar ist. Ein 3 x 3phasiger Eingang eines Direktumrichters 4 ist über einen Transformator T1, der sekundärseitig 3 x 3 Phasen aufweist und einen Schalter S1 an das Drehstromnetz 1 angeschlossen.

Der Rotor der Asynchronmaschine 3 ist über eine Kupplungswelle 10 mit dem Rotor einer Einphasen-Synchronmaschine 5 starr gekoppelt. n bezeichnet die Drehzahl der Kupplungswelle 10. Die Statorwicklung einer Synchronmaschine 5 ist über einen Schalter S5, einen Transformator T2 und einen Schalter S4 mit dem einphasigen Bahnnetz 2 verbunden und über einen weiteren Schalter S6 mit 2 Ausgängen des Frequenzumrichters 4. Der Transformator T2 transformiert die Bahnnetzspannung U₂ von 132 kV auf eine Sammelschienenspannung von 16 kV. Die Rotorwicklung der Synchronmaschine 5 ist über einen Zerhacker bzw. einen ausschaltbaren GTO-Thyristor 8 von einem Akkumulator bzw. einer Batterie 9 mit einer Ladungskapazität von 180 Ah und einer Spannung im Bereich von 170 V - 220 v gespeist. Der Zerhacker wird mit einer Taktfrequenz im Bereich von 200 Hz - 400 Hz betrieben. Der mittlere Erregerstrom für die Rotorwicklung der Synchronmaschine 5 beträgt 440 A, max. 650 A; die mittlere Erregerspannung 95 V, max. 170 V. Die Batterie 9 ist für eine Dauerleistung von 33 kW ausgelegt, bzw. für die 4- bis 8fache Leistung, falls sie auch zu einem ca. 15 min dauernden Hochfahren der Synchronmaschine 5 verwendet wird.

Parallel zur Batterie 9 ist in Reihe mit einer Drossel 7 mit einer Induktivität von 1 mH ein Erregerstromrichter bzw. 2phasiger Brückengleichrichter 6 mit Dioden und/oder Thyristoren in den Brückenzweigen geschaltet, der für eine Leistung von 150 kW ausgelegt ist und die Batterie 9 auflädt. Die Drossel 7 dient zur Reduzierung von Stromoberschwingungen.

Der Gleichrichter 6 ist wechselstromseitig über einen Erregertransformator T3 direkt an die Statorwicklung der Synchronmaschine 5 angeschlossen, so dass die Synchronmaschine 5 im Nebenschluss erregt wird. Gleichstromseitig liefert der Gleichrichter 6 eine Spannung im Bereich von 180 V - 230 V.

Mit S8 ist ein Bahnnetzschalter bezeichnet, der beim Auftreten eines Kurzschlusses 11 im Bahnnetz 2 durch eine nicht dargestellte Schutzeinrichtung geöffnet wird, damit die Synchronmaschine 5 nicht elektrische Energie in den Kurzschluss speist.

Der Anlauf der Umformergruppe erfolgt mittels der Asynchronmaschine 3, der Hochlauf mittels der Synchronmaschine 5. Zunächst wird der Frequenzumrichter 4 bei geschlossenen Schaltern S1 und S2 mit den Rotorwicklungen der Asynchronmaschine 3 verbunden, während deren Statorwicklungen über den Schalter S3 (bei geöffneten Schaltern S4 - S7) kurzgeschlossen sind. Die einstellbare Frequenz fₓ am Ausgang des Frequenzumrichters 4 wird von 0 Hz auf 18 Hz erhöht. Infolge der starren Kupplung des Rotors der Asynchronmaschine 3 mit dem Rotor der Synchronmaschine 5 erhöht sich deren Statorfrequenz auf ca. 40 % der Nennfrequenz. Danach wird der Frequenzumrichter 4 durch Schliessen des Schalters S6 und Oeffnen der Schalter S2 und S3 auf Speisung der Statorwicklung der über die Batterie 9 gleichstromerregten Synchronmaschine 5 umgeschaltet und die Frequenz fₓ am Ausgang des Frequenzumrichters 4 von 40 % auf 104 % der Nennfrequenz erhöht. Danach wird der Frequenzumrichter 4 wieder auf die Rotorwicklung der Asynchronmaschine 3 umgeschaltet, diese im reibungsbedingten Auslauf mit dem Landesnetz 1 synchronisiert und mittels des Schalters S7 an dieses angeschlossen. Danach wird mittels Schlupfregelung die Synchronmaschine 5 synchronisiert und durch Schliessen der Schalter S4 und S5 an das Bahnnetz 2 angeschlossen. Dabei wird vorher mittels des Frequenzumrichters 4 den Rotorwicklungen der Asynchronmaschine 3 ein schlupffrequenter Strom im Bereich von -2,5 Hz bis +2,5 Hz eingeprägt und dadurch die Drehzahl variiert, bis die Synchronisation der Synchronmaschine 5 erreicht ist.

Wichtig ist, dass die Synchronmaschine 5 keine Anfahrhilfserregung aus einem anderen Stromversorgungsnetz benötigt. Bei einem klemmennahen Kurzschluss 11 liefert die Batterie 9 den Erregerstrom weiter, so dass eine sichere Schutzauslösung mittels des Schalters S8 gewährleistet ist.

Anstelle einer Einphasensynchronmaschine 5 kann selbstverständlich eine Dreiphasensynchronmaschine verwendet werden, wenn das 2. Wechselstromnetz 3phasig ist. Anstelle eines 2phasigen Brückengleichrichters 6 ist dann ein 3phasiger zu verwenden. Falls die Bahnnetzspannung U₂ ≦ 16 kV ist, können die Schalter S4 und der Transformator T2 entfallen. Es versteht sich, dass Netz- und Sammelschienenspannung auch andere als im Beispiel angegebene Werte aufweisen können.

## Patentansprüche

1. Synchronmaschine mit einer
Nebenschlusserregereinrichtung,
a) welche Synchronmaschine (5) statorseitig mit einer Wechselstromquelle (2) und
b) rotorseitig über eine Nebenschlusserregereinrichtung (T3, 6 - 9) mit dieser Wechselstromquelle (2) in Wirkverbindung steht,
c) wobei die Nebenschlusserregereinrichtung einen Zerhacker (8) in Reihenschaltung mit einer Wicklung des Rotors der Synchronmaschine (5) aufweist,
dadurch gekennzeichnet,
d) dass die Statorwicklung der Synchronmaschine (5) mit dem Erregerstromrichter (6) in Wirkverbindung steht und
e) dass der Zerhacker (8) mit einer Batterie (9) in Reihe geschaltet ist.

2. Synchronmaschine nach Anspruch 1, dadurch gekennzeichnet,
a) dass parallel zur Batterie (9) eine Drossel (7)
b) in Reihe mit dem Erregerstromrichter (6) geschaltet ist.

3. Synchronmaschine nach Anspruch 2, dadurch gekennzeichnet, dass der Erregerstromrichter (6) ein Gleichrichter ist.

4. Synchronmaschine nach einem der Ansprüche 1 bis 3, dadurch gekennzeichnet,
a) dass die Wechselstromquelle (2) ein einphasiges Bahnnetz ist,
b) dass die Synchronmaschine (5) rotorseitig mit einer 3phasigen Asynchronmaschine (3) starr gekoppelt ist und
c) dass die Statorwicklung der Synchronmaschine (5) an einen Frequenzausgang für eine variable Frequenz eines Frequenzumrichters (4) anschliessbar ist, welcher Frequenzausgang auf den Rotor der Asynchronmaschine (3) umschaltbar ist.

## Claims

1. Synchronous machine having a shunt-wound excitation device,
a) which synchronous machine (5) is operationally connected on the stator side to an AC source (2), and
b) is operationally connected on the rotor side to this AC source (2) via a shunt-wound excitation device (T3, 6-9),
c) the shunt-wound excitation device having a chopper (8) connected in series to a winding of the rotor of the synchronous machine (5), characterized in that
d) the stator winding of the synchronous machine (5) is operationally connected to the exciter converter (6), and
e) the chopper (8) is connected in series with a battery (9).

2. Synchronous machine according to Claim 1, characterized in that
a) in parallel with the battery (9) an inductor (7)
b) is connected in series with the exciter converter
(6).

3. Synchronous machine according to Claim 2, characterized in that the exciter converter (6) is a rectifier.

4. Synchronous machine according to one of Claims 1 to 3, characterized in that
a) the AC source (2) is a single-phase traction system,
b) the synchronous machine (5) is rigidly coupled on the rotor side to a 3-phase asynchronous machine (3), and
c) the stator winding of the synchronous machine (5) can be connected to a frequency output for a variable frequency of a frequency converter (4), which frequency output can be switched over onto the rotor of the asynchronous machine (3).

## Revendications

1. Machine synchrone pourvue d'un dispositif d'excitation en dérivation,
a) cette machine synchrone (5) étant en liaison active, du côté du stator, avec une source de courant alternatif (2), et
b) du côté du rotor, par l'intermédiaire d'un dispositif d'excitation en dérivation (T3, 6 - 9) avec cette source de courant alternatif (2),
c) le dispositif d'excitation en dérivation comportant un hacheur (8) en série avec un enroulement du rotor de la machine synchrone (5),
caractérisée en ce :
d) que l'enroulement de stator de la machine synchrone (5) est en liaison active avec le convertisseur de courant d'excitation (6), et
e) que le hacheur (8) est connecté en série avec une batterie (9).

2. Machine synchrone suivant la revendication 1, caractérisée en ce que :
a) parallèlement à la batterie (9), une bobine d'arrêt (7)
b) est connectée en série avec le convertisseur de courant d'excitation (6).

3. Machine synchrone suivant la revendication 2, caractérisée en ce que le convertisseur de courant d'excitation (6) est un redresseur.

4. Machine synchrone suivant l'une quelconque des revendications 1 à 3, caractérisée en ce :
a) que la source de courant alternatif (2) est un réseau ferré monophasé;
b) que la machine synchrone (5) est accouplée rigidement du côté rotor à une machine asynchrone triphasée (3), et
c) que l'enroulement de stator de la machine synchrone (5) peut être connecté à une sortie de fréquence pour une fréquence variable d'un convertisseur de fréquence (4), cette sortie de fréquence pouvant être commutée sur le rotor de la machine asynchrone (3).
